# EUROPÄISCHE PATENTSCHRIFT

(11) **EP 3 232 172 B1**
(45) Veröffentlichungstag und Bekanntmachung des Hinweises auf die Patenterteilung: **13.03.2019**
(21) Anmeldenummer: 16165178.1
(22) Anmeldetag: 13.04.2016
(51) Int. Cl.: G01L 1/12, G01L 3/10

(54) **KRAFTSENSORIK FÜR ROBOTIKANWENDUNGEN**
FORCE SENSOR SYSTEM FOR ROBOTICS APPLICATIONS
TECHNIQUE SENSORIELLE POUR APPLICATIONS ROBOTIQUES

(43) Veröffentlichungstag der Anmeldung: 18.10.2017
(73) Patentinhaber: NCTE AG, 82041 Oberhaching (DE)
(72) Erfinder: Merold, Franz, 82064 Straßlach (DE); Eckschlager, Florian, 85521 Riemerling (DE); Sommer, Matthias, 92237 Sulzbach-Rosenberg (DE)
(74) Vertreter: Grünecker Patent- und Rechtsanwälte PartG mbB

(56) Entgegenhaltungen:
- WO-A1-00/37224
- WO-A1-95/33982
- US-A1- 2004 250 632

## Beschreibung

### Gebiet der Erfindung

Die Erfindung betrifft einen Drehmomentsensor und einen Kraftsensor für Roboter, wobei der Drehmomentsensor eine Hohlwelle, die in einem ersten axialen Abschnitt in einer ersten Umfangsrichtung magnetisiert ist, und an die ein zu messendes Drehmoment anlegbar ist, sowie einen ersten Magnetfeldsensor zum Erfassen eines durch den ersten Abschnitt der Hohlwelle erzeugten Magnetfelds außerhalb der Hohlwelle umfasst.

### Stand der Technik

Bei herkömmlichen Roboteranwendungen wird beispielsweise ein Arm oder ein Greifwerkzeug des Roboters auf der Basis von vorbestimmten, programmierten Bahnen und Geschwindigkeiten gesteuert. Mit einer weiterentwickelten Technologie unter Einsatz von Kraftsensoren reagiert der Roboter auf seine Umgebung und kann aufgrund von Rückmeldungen des Kraftsensors von seiner programmierten Bahn und der vorgegebenen Geschwindigkeit abweichen. Damit ist es möglich, komplexe Aufgaben mit Robotern auszuführen, die bislang durch Menschen unter Einsatz von konventioneller Automatisierungstechnik ausgeübt wurden. Solche Anwendungen können z.B. das exakte Positionieren eines Bauteils gegenüber einem anderen Bauteil sein, wobei in einem Regelkreis die bei einem vorsichtigen Aneinanderstoßen gemessenen Kräfte zur Positionierung verwendet werden. Dieses Verfahren entspricht einem auf "Gefühl" basierenden Vorgehen eines Menschen, mit seiner Hand bzw. seinen Fingern Gegenstände durch deren gegenseitigen Kontakt auszurichten und anzuordnen (beispielsweise beim Aufstecken eines Rings auf einen Stab).

Die Kraftsensoren, die dabei nach dem Stand der Technik zum Einsatz kommen beruhen auf dem Dehnungsprinzip. Ein Beispiel dafür ist ein Dehnungsmessstreifen, der bei Dehnung oder Stauchung den elektrischen Widerstand ändert. Der Dehnungsmessstreifen wird in der Regel in einer Brückenschaltung eingesetzt, so dass die Widerstandänderungen gemessen werden können.
Diese Kraftsensoren basierend auf Dehnungsmessstreifen haben jedoch den Nachteil, dass sie nicht wartungsfrei sind. Für Anwendungen, bei denen es auf dauerhafte Haltbarkeit und Langzeitstabilität ankommt, sind sie deshalb weniger geeignet. Die Empfindlichkeit der Dehnungsmessstreifen kann sich z.B. aufgrund von Umwandlungen in der mechanischen Struktur verändern, so dass sie ausgetauscht und/oder neu kalibriert werden müssen. Dies ist jedoch besonders für Robotikanwendungen unpraktikabel, da die Kraftsensoren teilweise schwer zugänglich verbaut sind und ein Austausch einen längeren Stillstand des Roboters bedingt.
In diesem Zusammenhang ist es - zusätzlich zur Kraftbestimmung - manchmal auch erwünscht, ein am Roboterarm oder der Greifvorrichtung anliegendes Drehmoment bzw. ein durch den Roboter damit ausgeübtes Drehmoment genau zu erfassen.
Ein weiterer Bedarf nach zuverlässigen Drehmoment- und Kraftsensoren ergibt sich bei der Zusammenarbeit eines Roboters und eines Menschen. Dabei ist es aus Gründen der Sicherheit wichtig, einen Bewegungsablauf des Roboters bei unvorhergesehener Berührung mit dem Menschen möglichst schnell zu stoppen, z.B. wenn der Mensch aus Unachtsamkeit in einen vorbestimmten Weg eines Roboterarms gelangt. Daher muss bereits eine leichte Berührung erkannt werden, um Verletzungen zu vermeiden.
Bei der Zusammenarbeit eines Roboters mit einem Menschen kann jedoch ein direkter Kontakt mit geringer Kraftwirkung auch wünschenswert sein, um dadurch beispielsweise einen Roboterarm an eine bestimmte Stelle oder in eine gewünschte Position zu führen.

Ein typischer Drehmomentsensor für einen Roboter mit einer Hohlwelle ist aus WO 95/33982 bekannt.

### Beschreibung der Erfindung

Der Erfindung liegt die Aufgabe zugrunde, einen für Robotikanwendungen geeigneten Drehmoment- und Kraftsensor mit verbesserter Langzeitstabilität und/oder Wartungsfreiheit bereitzustellen.

Diese Aufgabe wird gelöst durch einen Roboter nach Anspruch 1 gelöst.

Der erfindungsgemäße Roboter mit Drehmomentsensor umfasst die Merkmale des Anspruchs 1. Ein solcher Drehmomentsensor basiert auf einer Umkehrung des physikalischen Effekts der Magnetostriktion (Deformation magnetischer Materialien durch ein angelegtes magnetisches Feld), wobei ein auf die magnetisierte Hohlwelle einwirkendes Drehmoment eine Torsion der Hohlwelle hervorruft und als Folge davon eine Veränderung des Magnetfeldes außerhalb der Hohlwelle bewirkt. Diese Veränderung ist sehr empfindlich gegenüber der Größe des Drehmoments und kann mit dem Magnetfeldsensor gemessen werden.
Bei Robotikanwendungen dieser Drehmomentsensoren müssen elektrische Versorgungsleitungen oder Datenleitungen durch die Hohlwelle durchgeführt werden, z.B. Leitungen zu einem Elektromotor, der eine bewegliche Komponente wie etwa einen Roboterarm oder eine Greifvorrichtung antreibt. Durch Vorhandensein des ferromagnetischen Hohlstabs kann das durch eine solche Leitung erzeugte Magnetfeld vom Magnetfeldsensor abgeschirmt werden.
Eine Weiterbildung des erfindungsgemäßen Drehmomentsensors besteht darin, dass die Hohlwelle einen zweiten axialen Abschnitt aufweisen kann, der in einer zweiten Umfangsrichtung magnetisiert ist, wobei die zweite Umfangsrichtung vorzugsweise gegenläufig zur ersten Umfangsrichtung ist, ; wobei der Drehmomentsensor weiterhin einen zweiten Magnetfeldsensor zum Erfassen eines durch den zweiten Abschnitt der Hohlwelle erzeugten Magnetfelds außerhalb der Hohlwelle umfasst; und wobei der Hohlstab weiterhin zum Abschirmen von innerhalb des Hohlstabs vorhandenen oder erzeugbarer Magnetfeldern gegenüber dem zweiten Magnetfeldsensor vorgesehen ist. Zwischen dem ersten und dem zweiten axialen Abschnitt mit gegenläufigen Magnetisierungen befindet sich ein schwach magnetisierter Übergangsbereich von der ersten zur zweiten Umfangsrichtung.
Auf diese Weise kann eine erhöhte Genauigkeit der Messung erzielt werden, und es kann eine Kalibrierung der Messung auf ein verschwindendes kombiniertes Sensorsignal von den beiden Magnetfeldsensoren ohne ein anliegendes Drehmoment erfolgen.

Gemäß der Erfindung ist der Hohlstab zum Durchführen wenigstens einer elektrischen Leitung und zum Abschirmen von durch die wenigstens eine elektrische Leitung erzeugbaren magnetischen Feldern ausgebildet sein. Somit können beispielsweie elektrische Leitungen durch den Hohlstab und somit durch die Hohlwelle geführt werden, ohne dass die Messung der durch das Anlegen eines Drehmoments an die Hohlwelle hervorgerufenen Änderung der Magnetfeldstärke durch den Magnetfeldsensor davon beeinflusst wird.
Gemäß einer anderen Weiterbildung kann der erfindungsgemäße Drehmomentsensor weiterhin eine ferromagnetische Hülse umfassen, die um die Hohlwelle und den Magnetfeldsensor herum angeordnet ist, und die zum Abschirmen der Hohlwelle und/oder des ersten Magnetfeldsensors vor außerhalb der Hülse vorhandenen oder erzeugbaren Magnetfeldern vorgesehen ist, insbesondere zum Abschirmen des Erdmagnetfelds, wobei im Falle einer zweiten Magnetfeldsensors die Hülse auch zum Abschirmen des zweiten Magnetfeldsensors vor außerhalb der Hülse vorhandenen oder erzeugbaren Magnetfeldern vorgesehen ist.
Mit der ferromagnetischen Hülse wird beispielsweise das Erdmagnetfeld von den Magnetfeldsensoren abgeschirmt, welches ansonsten die Messung des Drehmoments beeinflussen könnte. Dies ist besonders beim Einsatz des Drehmomentsensors in einem Roboter wichtig, weil durch die Bewegung und Drehung eines Roboterarms im Raum hervorgerufene Änderungen der Magnetfeldrichtung am Ort des Sensors bzw. der Sensoren sich störend auf die erwünschte Messung einer Magnetfeldänderung der Hohlwelle aufgrund eines anliegenden Drehmoments auswirken können.

Die ferromagnetische Hülse kann zylinderförmig ausgebildet sein. In dieser Form kann die Hülse während der Montage leicht über die bereits montierten Komponenten geschoben werden.
Der ferromagnetische Hohlstab und/oder die ferromagnetische Hülse können aus weichmagnetischem Material gefertigt sein. Das weichmagnetische Material kann Stahl, insbesondere Baustahl umfassen, vorzugsweise S235 JR. Dies stellt zum Einen ein für die Abschirmung gut geeignetes Material dar, und es ist zum Anderen ein kostengünstiges Material.
Die magnetisierte Hohlwelle ist so ausgebildet, dass daran ein Drehmoment angelegt werden kann, wodurch eine vom Drehmoment abhängige Änderung der vom Magnetfeldsensor erfassten Magnetfeldstärke bewirkt wird. Es kann beispielsweise jeweils am Ende der Hohlwelle ein Befestigungsmittel vorgesehen sein mit dem eine Verbindung des jeweiligen Endes mit einem jeweiligen beweglichen Roboterelement hergestellt werden kann.
Die oben genannte Aufgabe wird weiterhin gelöst durch einen Kraftsensor, der einen erfindungsgemäßen Roboter mit Drehmomentsensor, wobei aus einem mit dem Drehmomentsensor gemessenen Drehmoment und einem Hebelarm eine Kraft ermittelbar ist.

Die Erfindung stellt einen Roboter zur Verfügung, wobei wenigstens eine Stromversorgungsleitung für einen Elektromotor des beweglichen Elements und/oder eine Datenleitung des Roboters durch den Hohlstab geführt ist.

Eine Weiterbildung des Roboters besteht darin, dass eine Steuereinrichtung zum Steuern des beweglichen Elements in Abhängigkeit des durch den Drehmomentsensor gemessenen Drehmoments bzw. in Abhängigkeit der durch den Kraftsensor gemessenen Kraft vorgesehen sein kann.

Eine andere Weiterbildung des erfindungsgemäßen Drehmomentsensors oder eine von dessen Weiterbildungen, des erfindungsgemäßen Kraftsensor oder des erfindungsgemäßen Roboters besteht darin, dass Endbereiche der Hohlwelle dazu ausgebildet sein können, ein wirkendes Drehmoment und/oder eine wirkende Kraft aufzunehmen, insbesondere mittels an den Endbereichen der Hohlwelle verbundener Flansche, die mit jeweils mit einem Drehmoment und/oder Kraft ausübenden Teil verbunden sind, insbesondere mit jeweils einem Drehmoment und/oder Kraft ausübenden Teil des Roboters.

Die genannten Weiterbildungen können einzeln eingesetzt oder wie beansprucht geeignet miteinander kombiniert werden.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.

### Kurzbeschreibung der Zeichnungen

- Fig. 1: zeigt eine erste Ausführungsform des erfindungsgemäßen Drehmomentsensors.
- Fig. 2: zeigt eine zweite Ausführungsform des erfindungsgemäßen Drehmomentsensors.
- Fig. 3: zeigt einen erfindungsgemäßen Roboter mit einem erfindungsgemäßen Drehmomentsensor.

### Ausführungsformen

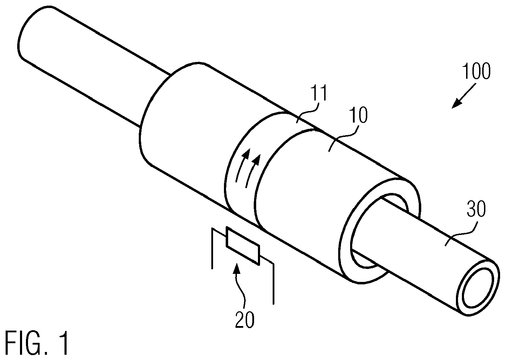

In Fig. 1 ist eine erste Ausführungsform 100 des erfindungsgemäßen Drehmomentsensors dargestellt.

Der Drehmomentsensor 100 des erfindungsgemäßen Roboters umfasst in dieser Ausführungsform eine Hohlwelle 10, die in einem axialen Abschnitt 11 in einer Umfangsrichtung magnetisiert ist (siehe Pfeile im Abschnitt 10); einen Magnetfeldsensor 20 zum Erfassen eines durch den Abschnitt 11 der Hohlwelle 10 erzeugten Magnetfelds außerhalb der Hohlwelle; und einen ferromagnetischen Hohlstab 30 zum Abschirmen der Hohlwelle 10 und/oder des Magnetfeldsensors 20 vor innerhalb des Hohlstabs 30 vorhandenen oder erzeugbarer Magnetfeldern, wobei sich der Hohlstab 30 innerhalb der Hohlwelle 10 und durch diese hindurch erstreckt.
An die Hohlwelle 10 kann ein zu messendes Drehmoment angelegt werden. Durch die damit hervorgerufene Torsion ändert sich das von dem Magnetfeldsensor 20 gemessene Magnetfeld. Das Signal wird einer nicht dargestellten Auswertevorrichtung zugeführt, die daraus das anliegende Drehmoment bzw. bei bekanntem Hebelarm die ausgeübte Kraft ermitteln kann. Durch den Hohlstab 30 kann eine Stromversorgungsleitung geführt werden, um beispielsweise einen Elektromotor anzutreiben, dessen ausgeübtes Drehmoment bzw. Kraft geregelt werden soll. Der Hohlstab 30 ist vorzugsweise aus Baustahl gefertigt.

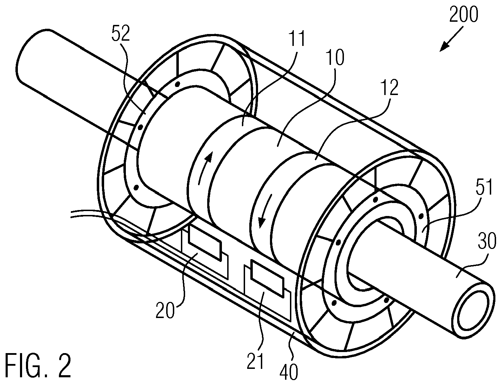

In Fig. 2 ist eine zweite Ausführungsform 200 des erfindungsgemäßen Drehmomentsensors dargestellt.

Der Drehmomentsensor 200 des erfindungsgemäßen Roboters umfasst in dieser Ausführungsform gegenüber der ersten Ausführungsform auf der Hohlwelle 10 einen zweiten magnetisierten axialen Abschnitt 12 der gegenläufig zum ersten Abschnitt 11 magnetisiert ist. Weiterhin ist ein zum zweiten magnetisierten axialen Abschnitt 12 zugehöriger zweiter Magnetfeldsensor 21 außerhalb der Hohlwelle 10 angeordnet, um eine magnetisches Feld vom zweiten Abschnitt 12 zu messen. An den Enden der Hohlwelle 10 sind Flansche 51, 52 befestigt, die mit jeweils einem Drehmoment ausübenden Bauteil (beispielsweise mit einer bewegten und einer unbewegten Komponente einer Greifvorrichtung eines Roboters) verbunden werden können.
In dieser Ausführungsform ist zudem eine ferromagnetische Hülse 40 vorgesehen. Die ferromagnetische Hülse 40 ist um die Hohlwelle 10 und die Magnetfeldsensoren 20, 21 herum angeordnet und dient zum Abschirmen der Hohlwelle 10 und der Magnetfeldsensoren 20, 21 vor außerhalb der Hülse 40 vorhandenen oder erzeugbaren Magnetfeldern, insbesondere zum Abschirmen des Erdmagnetfelds. Die Hülse 40 ist vorzugsweise aus Baustahl gefertigt. Die Hülse ist dabei an den Flanschen 51, 52 befestigt.

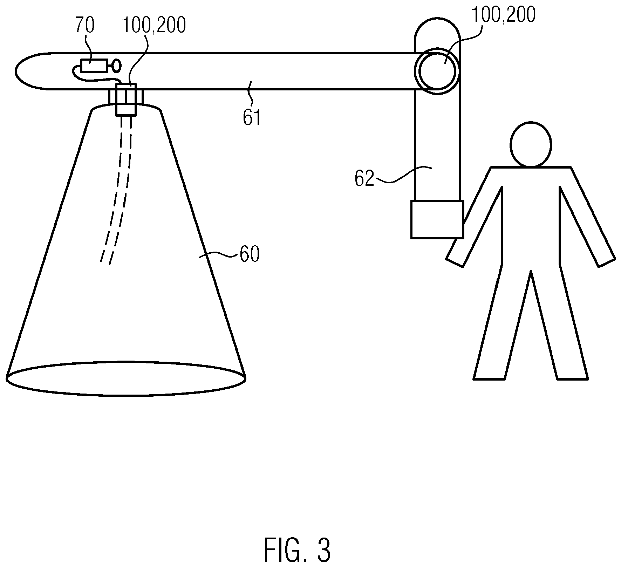

Figur 3 zeigt einen erfindungsgemäßen Roboter 300 mit einem oder mehreren Drehmomentsensoren 100, 200.
Der Roboter hat in diesem Beispiel ein Standelement 60 und zwei bewegliche Elemente 61, 62. An den Gelenkstellen bzw. Drehbereichen zwischen den Elementen sind Drehmoment- / Kraftsensoren 100, 200 vorgesehen, um beispielsweise ein durch einen Elektromotor 70 zwischen den Elementen 60 und 61 ausgeübtes Drehmoment zu erfassen. Stromführende Kabel zur Versorgung des Elektromotors können durch den Hohlstab 30 (siehe Figuren 1 und 2) geführt werden. Zwischen den Elementen 61 und 62 kann andererseits beispielsweise die durch das Element 62 ausgeübte Kraft auf ein unerwartetes Hindernis (wie etwa einen Menschen) erfasst werden und die Bewegung der Elemente 61, 62 entsprechend geregelt werden.
Die dargestellten Ausführungsformen sind lediglich beispielhaft und der vollständige Umfang der vorliegenden Erfindung wird durch die Ansprüche definiert.

## Patentansprüche

1. Roboter, umfassend:
einen Drehmomentsensor (100, 200) zum Messen eines an einem beweglichen Element (61, 62) des Roboters anliegenden Drehmoments, wobei der Drehmomentsensor umfasst:
eine Hohlwelle (10), die in einem ersten axialen Abschnitt (11) in einer ersten Umfangsrichtung magnetisiert ist, und an die ein zu messendes Drehmoment anlegbar ist;
einen ersten Magnetfeldsensor (20) zum Erfassen eines durch den ersten Abschnitt der Hohlwelle erzeugten Magnetfelds außerhalb der Hohlwelle;
**gekennzeichnet durch** einen ferromagnetischen Hohlstab (30) zum Abschirmen der Hohlwelle und/oder des ersten Magnetfeldsensors vor innerhalb des Hohlstabs vorhandenen oder erzeugbarer Magnetfeldern, wobei sich der Hohlstab innerhalb der Hohlwelle und durch diese hindurch erstreckt;
wobei der Hohlstab zum Durchführen wenigstens einer elektrischen Leitung und zum Abschirmen von durch die wenigstens eine elektrische Leitung erzeugbaren magnetischen Feldern ausgebildet ist; und
wobei wenigstens eine Stromversorgungsleitung für einen Elektromotor (70) des beweglichen Elements und/oder eine Datenleitung des Roboters durch den Hohlstab geführt ist.

2. Roboter nach Anspruch 1, wobei die Hohlwelle einen zweiten axialen Abschnitt (12) aufweist, der in einer zweiten Umfangsrichtung magnetisiert ist, wobei die zweite Umfangsrichtung vorzugsweise gegenläufig zur ersten Umfangsrichtung ist, wobei der Drehmomentsensor weiterhin einen zweiten Magnetfeldsensor zum Erfassen eines durch den zweiten Abschnitt der Hohlwelle erzeugten Magnetfelds außerhalb der Hohlwelle umfasst; und wobei der Hohlstab weiterhin zum Abschirmen von innerhalb des Hohlstabs vorhandenen oder erzeugbarer Magnetfeldern gegenüber dem zweiten Magnetfeldsensor vorgesehen ist.

3. Roboter nach einem der Ansprüche 1 oder 2, weiterhin umfassend:
eine ferromagnetische Hülse (40), die um die Hohlwelle und den Magnetfeldsensor herum angeordnet ist, zum Abschirmen der Hohlwelle und/oder des ersten Magnetfeldsensors vor außerhalb der Hülse vorhandenen oder erzeugbaren Magnetfeldern, insbesondere zum Abschirmen des Erdmagnetfelds, wobei in Kombination mit Anspruch 2 die Hülse auch zum Abschirmen des zweiten Magnetfeldsensors vor außerhalb der Hülse vorhandenen oder erzeugbaren Magnetfeldern vorgesehen ist.

4. Roboter nach Anspruch 3, wobei die Hülse zylinderförmig ausgebildet ist.

5. Roboter nach einem der Ansprüche 1 bis 4, wobei der ferromagnetische Hohlstab aus weichmagnetischem Material gefertigt ist, wobei das weichmagnetische Material insbesondere Stahl umfasst, bevorzugt Baustahl, besonders bevorzugt S235 JR.

6. Roboter nach einem der Ansprüche 3 oder 4, wobei die ferromagnetische Hülse aus weichmagnetischem Material gefertigt ist, wobei das weichmagnetische Material insbesondere Stahl umfasst, bevorzugt Baustahl, besonders bevorzugt S235 JR.

7. Roboter nach einem der Ansprüche 1 bis 6, wobei an die magnetisierte Hohlwelle ein Drehmoment anlegbar ist, wodurch eine vom Drehmoment abhängige Änderung der vom Magnetfeldsensor erfassten Magnetfeldstärke bewirkt wird.

8. Roboter nach einem der Ansprüche 1 bis 7 mit einem Kraftsensor, wobei aus einem mit dem Drehmomentsensor gemessenen Drehmoment und einem Hebelarm eine Kraft ermittelbar ist.

9. Roboter nach einem der Ansprüche 1 bis 8, wobei das bewegliche Element insbesondere ein Roboterarm und/oder eine Greifvorrichtung umfasst.

10. Roboter nach Anspruch 9, weiterhin umfassend:
eine Steuereinrichtung zum Steuern des beweglichen Elements in Abhängigkeit des durch den Drehmomentsensor gemessenen Drehmoments bzw. in Abhängigkeit der durch den Kraftsensor gemessenen Kraft.

11. Roboter nach Anspruch 9 oder 10, wobei Endbereiche der Hohlwelle dazu ausgebildet sind, ein wirkendes Drehmoment und/oder eine wirkende Kraft aufzunehmen, insbesondere mittels an den Endbereichen der Hohlwelle verbundener Flansche.

## Claims

1. Robot comprising:
a torque sensor (100, 200) for measuring a torque applied to a movable element (61, 62) of the robot, the torque sensor comprising:
a hollow shaft (10) which is magnetised in a first circumferential direction in a first axial portion (11) and to which a torque to be measured can be applied;
a first magnetic-field sensor (20) for detecting a magnetic field which is outside of the hollow shaft and produced by the first portion of the hollow shaft;
**characterised by**
a ferromagnetic hollow rod (30) for isolating the hollow shaft and/or the first magnetic-field sensor from magnetic fields that are present or can be produced inside the hollow rod, the hollow rod extending inside the hollow shaft and therethrough;
the hollow rod being designed to have at least one electrical line fed therethrough and to isolate magnetic fields that can be produced by the at least one electrical line; and
at least one power supply line for an electric motor (70) of the movable element and/or a data line of the robot being guided through the hollow rod.

2. Robot according to claim 1, wherein the hollow shaft comprises a second axial portion (12) which is magnetised in a second circumferential direction, wherein the second circumferential direction extends preferably in the opposite direction to the first circumferential direction, wherein the torque sensor further comprises a second magnetic-field sensor for detecting a magnetic field which is outside of the hollow shaft and produced by the second portion of the hollow shaft; and wherein the hollow rod is further provided for isolating magnetic fields that are present or can be generated inside the hollow rod from the second magnetic-field sensor.

3. Robot according to either claim 1 or claim 2, further comprising:
a ferromagnetic sleeve (40), which is arranged around the hollow shaft and the magnetic-field sensor, for isolating the hollow shaft and/or the first magnetic-field sensor from magnetic fields that are present or can be produced outside of the sleeve, in particular for isolating the Earth's magnetic field, the sleeve, in combination with claim 2, being further provided for isolating the second magnetic-field sensor from magnetic fields that are present or can be produced outside of the sleeve.

4. Robot according to claim 3, wherein the sleeve is cylindrical.

5. Robot according to any of claims 1 to 4, wherein the ferromagnetic hollow rod is made from soft magnetic material, wherein the soft magnetic material comprises in particular steel, preferably structural steel, more preferably S235 JR.

6. Robot according to either claim 3 or claim 4, wherein the ferromagnetic sleeve is made from soft magnetic material, wherein the soft magnetic material comprises in particular steel, preferably structural steel, more preferably S235 JR.

7. Robot according to any of claims 1 to 6, wherein a torque can be applied to the magnetised hollow shaft, as a result of which the strength of the magnetic field detected by the magnetic-field sensor changes according to the torque.

8. Robot according to any of claims 1 to 7, comprising a force sensor, wherein a force can be determined from a torque that is measured by means of the torque sensor and a lever arm.

9. Robot according to any of claims 1 to 8, wherein the movable element comprises in particular a robot arm and/or a gripping device.

10. Robot according to claim 9, further comprising:
a control means for controlling the movable element according to the torque that is measured by the torque sensor or according to the force that is measured by the force sensor.

11. Robot according to either claim 9 or claim 10, wherein end regions of the hollow shaft are designed to absorb an active torque and/or an active force, in particular by means of a flange connected to the end regions of the hollow shaft.

## Revendications

1. Robot comprenant :
un capteur de couple (100, 200) pour mesurer un couple appliqué à un élément mobile (61, 62) du robot, le capteur de couple comprenant :
un arbre creux (10), qui, dans un premier tronçon axial (11), est magnétisé dans une première direction périphérique, et auquel peut être appliqué un couple à mesurer ;
un premier capteur de champ magnétique (20) pour relever un champ magnétique engendré par le premier tronçon de l'arbre creux à l'extérieur de l'arbre creux ;
**caractérisé par**
une tige creuse (30) ferromagnétique destinée à assurer un blindage de l'arbre creux et/ou du premier capteur magnétique à l'encontre de champs magnétiques existants ou pouvant être engendrés à l'intérieur de la tige creuse, la tige creuse s'étendant à l'intérieur de l'arbre creux et à travers celui-ci ;
la tige creuse étant réalisée pour assurer le passage d'au moins un conducteur électrique et pour assurer un blindage à l'encontre de champs magnétiques, qui peuvent être engendrés par ledit au moins un conducteur électrique ; et
au moins un conducteur d'alimentation en courant pour un moteur électrique (70) de l'élément mobile et/ou un conducteur de transmission de données du robot, étant menés à travers la tige creuse.

2. Robot selon la revendication 1, dans lequel l'arbre creux présente un deuxième tronçon axial (12), qui est magnétisé dans une deuxième direction périphérique, la deuxième direction périphérique étant de préférence de sens opposé à la première direction périphérique ;
dans lequel le capteur de couple comprend par ailleurs un deuxième capteur de couple pour relever un champ magnétique engendré par le deuxième tronçon de l'arbre creux à l'extérieur de l'arbre creux ;
et dans lequel la tige creuse est par ailleurs prévue pour assurer un blindage du deuxième capteur de champ magnétique à l'encontre de champs magnétiques existant ou pouvant être engendrés à l'intérieur de la tige creuse.

3. Robot selon l'une des revendications 1 ou 2, comprenant, en outre :
une douille ferromagnétique (40), qui est agencée autour de l'arbre creux et autour du capteur de champ magnétique, pour assurer le blindage de l'arbre creux et/ou du premier capteur de champ magnétique à l'encontre de champs magnétiques existant ou pouvant être engendrés à l'extérieur de la douille, notamment pour assurer le blindage à l'encontre du champ magnétique terrestre, robot dans lequel, en combinaison avec la revendication 2, la douille est également prévue pour assurer le blindage du deuxième capteur de champ magnétique à l'encontre de champs magnétiques existant ou pouvant être engendrés à l'extérieur de la douille.

4. Robot selon la revendication 3, dans lequel la douille est réalisée selon une forme cylindrique.

5. Robot selon l'une des revendications 1 à 4, dans lequel la tige creuse ferromagnétique est fabriquée en un matériau magnétique doux, le matériau magnétique doux comprenant notamment de l'acier, de préférence de l'acier de construction, et de manière particulièrement préférée de l'acier S235 JR.

6. Robot selon l'une des revendications 3 ou 4, dans lequel la douille ferromagnétique est fabriquée en un matériau magnétique doux, le matériau magnétique doux comprenant notamment de l'acier, de préférence de l'acier de construction, et de manière particulièrement préférée de l'acier S235 JR.

7. Robot selon l'une des revendications 1 à 6, dans lequel un couple peut être appliqué à l'arbre creux magnétisé, en provoquant ainsi une variation dépendant du couple, de l'intensité de champ magnétique relevée par le capteur de champ magnétique.

8. Robot selon l'une des revendications 1 à 7, comprenant un capteur de force et dans lequel une force peut être déterminée à partir d'un couple mesuré par le capteur de couple, et à partir d'un bras de levier.

9. Robot selon l'une des revendications 1 à 8, dans lequel l'élément mobile comprend notamment un bras de robot et/ou un dispositif préhenseur.

10. Robot selon la revendication 9, comprenant en outre :
un dispositif de commande pour commander l'élément mobile en fonction du couple mesuré par le capteur de couple ou respectivement en fonction de la force mesurée par le capteur de force.

11. Robot selon la revendication 9 ou la revendication 10, dans lequel des zones d'extrémité de l'arbre creux sont configurées pour absorber un couple actif et/ou une force active, notamment au moyen de flasques reliés aux zones d'extrémité de l'arbre creux.
